# EUROPEAN PATENT APPLICATION

(11) **EP 1 326 192 A1**
(43) Date of publication of application: **09.07.2003**
(21) Application number: 02256822.4
(22) Date of filing: 01.10.2002
(51) Int. Cl.: G06F 17/60, G07F 19/00

(54) **E-commerce payment system**

(30) Priority: 07.01.2002 EP 02250060
(71) Applicant: S.W.I.F.T. sc, 1310 La Hulpe (BE)
(72) Inventor: Keogh, Jackie, Corn Exchange, London EC3R 7NE (GB); Vermeulen, Peter, 1310 La Hulpe (BE)
(74) Representative: Lloyd, Patrick Alexander Desmond

(57) **Abstract**

The invention allows electronic initiation of payments and provision of payment assurance through an initiation intermediary logically located between the buyer and seller and the buyer's and seller's banks. Transaction terms, including payment terms, are first negotiated between the buyer and seller. An initiation message comprising a payment instruction, optionally a payment assurance request, and/or commercial transaction data is sent from the buyer, for example through the seller's web site, to the payment initiation intermediary. Commercial transaction data is held at the intermediary and a payment instruction sent to the buyer's bank. If the buyer's bank agrees to the payment initiation a confirmation message is returned to the intermediary and sent to the seller's bank. Any commercial transaction data is attached to the confirmation message and sent to the seller. The seller provides a signed receipt to which is added the confirmation and sent to the buyer via the payments initiation intermediary.

## Description

This invention relates to a method and system for initiating electronic payments including, optionally, the provision of online payment assurance to sellers, for example for goods or services purchased electronically, over the Internet.

In recent years, the advent of the Internet has seen an explosion of e-commerce activity. However, serious security concerns have hampered the development of the e-commerce sector. In the coming years, B2B (Business to Business) e-commerce is expected to grow rapidly and it is forecast that the US value of trade over the Internet in 2004 will be worth over $5 trillion.

We have appreciated that B2B e-commerce requires payment initiation services which can be relied upon by buyers and sellers, which can make use of the trusted relationships between financial institutions and their corporate customers, and which have quick access to payment clearing and settlement systems.

The present invention aims to provide a system and method to meet this need.

According to the invention, there is provided a method of electronically initiating payments the method comprising: sending an initiation message to a payments initiation intermediary, the initiation message including a payment instruction and/or commercial data ; processing and storing the initiation message at the payments initiation intermediary; and sending the payment instruction to the buyer's financial institution where the message includes a payment instruction to be actioned.

The invention also provides an electronic payments initiation system comprising a payments initiation intermediary logically located between a buyer and a buyer's bank, the payments initiation intermediary comprising a processor and a store for processing and storing initiation messages sent from the buyer , the initiation message including a payment instruction and/or commercial data, the payments initiation intermediary further comprising a message sending device for sending the payment initiation message to the buyer's bank where the message includes a payment instruction to be actioned.

Preferably, the processing of the payment initiation message at the payments initiation intermediary comprises assigning a unique identifier to the transaction.

Preferably, the payment initiation message includes commercial transaction data which may be, for example, a purchase order, delivery note or an invoice.

In a preferred embodiment of the invention, e-commerce transactions can be initiated via a payments initiation intermediary logically situated between the buyer and seller and the buyer's and seller's banks. Transaction terms, including payment terms, are first negotiated between the buyer and seller. An initiation message is sent from the buyer, based on a page from the seller's web site, to the payment intermediary. This message includes a payment instruction and may request payment assurance and possibly reassurance. Commercial transaction data, if present, is held at the intermediary and the buyer's payment instruction sent to the buyer's bank. If the buyer's bank agrees to act upon the payment instruction a confirmation message is sent by the intermediary to the seller's bank either for information only or to request a payment reassurance. The commercial transaction data is attached by the payment initiation intermediary to the confirmation message and sent to the seller. The seller provides a signed receipt to which is added the confirmation and sent to the buyer via the payments initiation intermediary.

Embodiments of the invention have the advantage that payment initiation for e-commerce transactions, particularly B2B e-commerce, can be provided that allows payments to be initiated on-line. Embodiments of the invention enable the identity of the trading parties to be verified, and can provide certainty of payment for the seller where assurance is provided. Embodiments of the invention also support tracking and reconciliation by linking the trade transaction and the payments and providing realtime transaction information. The ability to make conditional payments, provided by preferred embodiments of the invention, has the advantage of providing a very flexible payments initiation tool. Moreover, preferred embodiments of the invention may provide for assurance and reassurance to be given, further enhancing the value.

The invention also provides a method of electronically requesting a payment assurance, the method comprising: sending a payment assurance request to a payments initiation intermediary; processing and storing the payment assurance request at the payments initiation intermediary; and sending the payment assurance request to a financial institution from which assurance is requested to be actioned.

The invention further provides a system for electronically requesting payment assurances, comprising: A payments initiation intermediary logically located between a buyer and a buyer's financial institution, the payments institution intermediary comprising a processor and a store for processing and storing electronic payment assurance requests sent by a party to a transaction, the payments initiation intermediary further comprising a message sending device for sending the payment assurance request to the financial institution from which assurance is requested to be actioned.

Embodiments of the invention will now be described, by way of example only, and with reference to the accompanying drawings, in which:
Figure 1 illustrates a payment initiation message flow in a system embodying the invention;
Figure 2 illustrates a technical realisation of the payments initiation message flow of Figure 1;
Figure 3 shows payment initiation execution flows in the system of Figure 2;
Figure 4 shows how a revocable payment initiation may be cancelled;
Figure 5 shows how an irrevocable payment initiation may be cancelled;
Figure 6 shows a hardware implementation of the system of Figure 2; and
Figure 7 shows, in more detail, the bank hardware.

The system to be described is based on the well known four-corner model which involves a buyer, a seller and their respective financial institutions. However, the scope of the invention is not limited to the four corner scenario and also encompasses, for example, a two corner model in which payment initiation instructions are made from a buyer to its bank without involving the seller and their financial institution, and a three corner model which appears when buyer and seller are customers of the same financial institution.

Before describing the system, it is helpful to understand the various mechanisms that parties can choose to initiate a B2B online payment. Eight mechanisms are defined in Table 1 below:

**Table 1**

| **No.** | **Payment Initiation Mechanism** | **Bank's Obligation** | **Payment Revocation** | **Payment Condition** |
|---|---|---|---|---|
| 1 | Revocable Unconditional | NO | Unilaterally by Buyer | NO |
| 2 | Revocable Conditional | NO | Unilaterally by Buyer | YES |
| 3 | Irrevocable Unconditional | NO | Bilaterally by Buyer & Seller | NO |
| 4 | Irrevocable Conditional | NO | Bilaterally by Buyer & Seller | YES |
| 5 | Bank Assured Conditional | Buyer's Bank | Bilaterally by Buyer & Seller | YES |
| 6 | Bank Assured Unconditional | Buyer's Bank | Bilaterally by Buyer & Seller | NO |
| 7 | Re-assured Conditional | Buyer's Bank and Sellers Bank | Bilaterally by Buyer & Seller | YES |
| 8 | Re-assured Unconditional | Buyer's Bank and Sellers Bank | Bilaterally by Buyer & Seller | NO |

The mechanisms of table 1 are built on combinations of the bank's obligation, revocability and payment conditions.

The bank's obligation relates to a request for the buyer's bank to provide a payment assurance, that is a primary commitment to pay the seller. A re-assurance constitutes a secondary liability provided by the seller's bank over and above the buyer's bank's assurance.

Revocability is an indication of which party can revoke a payment initiation. A revocable payment initiation can be cancelled unilaterally by the buyer. Agreement of both buyer and seller is required to cancel an irrevocable payment initiation. The buyer's bank can refuse to pay under either scenario through lack of funds if no assurance has been provided. Revocation must take place before the payment execution date.

Conditions may be placed on payment initiation. A conditional payment initiation is subject to confirmation that any condition or conditions have been fulfilled, for example, delivery of goods. The buyer or buyer's bank as specified in the initiation message confirms satisfaction of the conditions. These conditions need not necessarily be the terms and conditions of the trade itself. An unconditional payment initiation is activated by the buyer's bank at the execution date, independent of other events.

The system to be described operates by an exchange of messages. A set of twelve defined standard messages are used as follows.
1. Initiation (which may include assurance request and conditions).
2. Initiation response.
3. Initiation confirmation.
4. Condition confirmation.
5. Debit confirmation.
6. Credit confirmation.
7. Transaction status request.
8. Transaction status response.
9. Cancellation request.
10. Cancellation confirmation.
11. Error.
12. Receipt.

In addition to the payment initiation mechanisms defined above, electronic messages between parties using the system embodying the invention are governed by a set of rules, known as a Rulebook, that defines the roles, obligations and liabilities of all the players, and which provides the legal framework for the creation of the payment initiation mechanism to facilitate B2B Internet based commerce.

The payment initiation intermediary, whose role will be discussed in detail later, has a contractual relationship with the financial institutions who, in turn, have a contractual relationship with their customers. The payments initiation and assurance service is provided by the payment initiation intermediary to the financial institutions that in turn offer to their customers a value added offering based on such service. A combination of four layers may be structured as follows:
Layer 4 is a layer of services that financial institutions develop and customise themselves to provide added value and to distinguish themselves from other financial institutions who offer the e-payments initiation service.
Layer 3 is the e-payments initiation service provided by the payment initiation intermediary to the financial institutions. It supports on-line initiation of buyerdriven credit transfer with or without payment assurance, which may be linked to the underlying commercial transactions.
Layer 2 is the trust infrastructure provided by the combination of a certification scheme with on-line validation of the certificates of the parties to the transaction, for example, using the present applicant's validation method and apparatus as described in our copending application EP 01305893.5. This layer provides identity assurance and gives the customers of the financial institution the assurance that payments are being made between correctly identified parties.
Layer 1 is the secure messaging infrastructure and non-repudiation services provided by a service provider. This layer is the foundation to the upper three layers outline above.

Layers 1 to 4 may be provided by a number of different entities or a single entity.

The standard messages referred to above are carried by the applicant's messaging platform described in our earlier application EP 01305893.5 which is implemented in financial institutions under the trademark TrustAct. The contents of that application are hereby incorporated in their entirety by reference. However other messaging systems may be used. The system of EP 01305893.5 allows online validation of certificates prior to completion of payment initiation. The system stores and time stamps messages and the underlying data ensuring the parties to the transaction of non-repudiation of emission, reception, time and content.

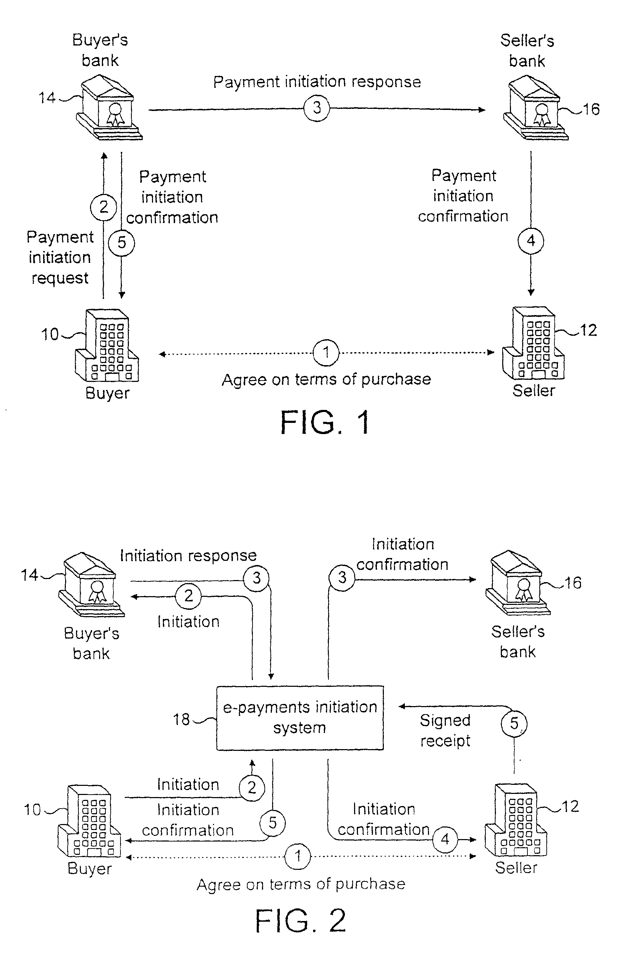

Turning now to Figure 1, there is illustrated one example of the underlying business message flow in a system and method embodying the invention. The buyer 10 agrees on terms of purchase with a seller 12 and initiates payment by making a payment initiation request to the buyer's bank 14. The buyer's bank 14 sends a payment initiation response to the seller's bank 16 which then sends a payment initiation confirmation to the seller 12. The buyer's bank then sends a payment initiation confirmation back to the buyer.

Figure 2 shows how all the message flow of Figure 1, apart from agreement of the terms of purchase, is performed through the intermediary of a payments initiation system. The payment mechanism will now be described in greater detail.

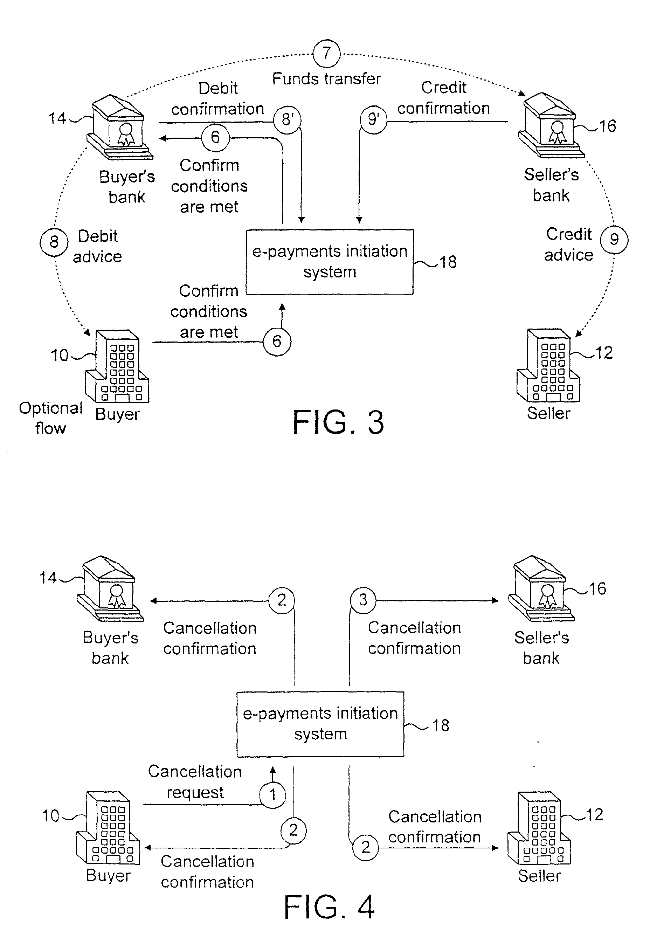

In Figures 1 and 2, the various stages of the transaction are labelled 1-5. These will now be described in turn.
**1.** The buyer browses the seller's web site and selects goods or services to be purchased. The buyer and seller negotiate the terms of the trade on-line, including price and payment terms, and, when an agreement has been reached, the seller presents the buyer with a web page that summarises the purchase order and payment terms.
**2.** If the buyer is satisfied with the purchase details, they instruct their bank 14 to make a payment subject to the terms agreed. These terms will be one of the 8 payment initiation mechanisms described above and will define whether or not the payment initiation is revocable or irrevocable, conditional or unconditional, assured or not. The payment instruction is made by completing the buyer's account details on the seller's web page containing the payment terms. This information may be pre-coded. The buyer may add any payment conditions at this stage and then confirms the payment instruction by pressing an "ep+ button". The selection of this button creates a payment initiation message containing the commercial terms, and an instruction to pay the seller. It should be understood that inclusion of the commercial transaction data in the payment initiation message is not essential. The payment initiation message need only include a payment instruction. This initiation message is signed by the buyer and sent to the e-payments initiation system 18 otherwise referred to as a payments initiation intermediary where it is validated, assigned a unique transaction ID, time stamped and stored. The payment instruction is held by the application, pending the verification of the identity of all or some of the parties to the transaction: the buyer, the seller and their respective banks. The initiation instruction is then sent to the buyer's bank to be actioned. The commercial data, which in this example is a purchase order, is detached from the payment initiation and remains stored in the e-payments initiation system database.
**3.** The buyer's bank must decide whether or not to act positively on the payment initiation message. It could not do this, for example, if the buyer did not have sufficient funds or credit to purchase the goods or services of the transaction. The buyer's bank gives a positive or negative response to the initiation message which is sent to the e-payments initiation system 18.
   If the buyer's bank rejects the payment initiation request, a negative response is sent to the e-payments initiation system 18 accompanied by a business reason which is sent on to the buyer. The seller receives an error message which may be without mention of the business reason. The transaction process ends and is considered failed.
   If the buyer's bank 14 sends a positive response to the payment initiation message, the e-payments initiation system 18 sends a payment initiation confirmation to the seller's bank either for information only or to request a payment reassurance. This message confirms receipt of an instruction to transfer funds to the seller's bank, which may be combined with a payment assurance if that has been requested and forms part of the terms of the transaction.
   The message flow in Figure 2 is based on a positive response having been sent by the buyer's bank 14.
**4.** The payment initiation confirmation is also sent to the seller through the e-payments initiation system where the commercial details of the transaction are retrieved from the store and reconnected. The seller receives a message confirming that the buyer has agreed to proceed with the commercial transaction and that the buyer's bank has accepted a payment instruction. The message will also state that a payment assurance has been provided, if requested.
**5.** The seller provides a digitally signed receipt to which is added the buyer's bank's confirmation and sent to the buyer via the e-payments initiation system.
   Referring now to Figure 3, the manner in which execution is performed will now be described. The execution of funds transfer is outside the scope of this application and takes place through traditional clearing and settlement systems as decided between the financial institutions and their customers.
   Unconditional payment instructions will be undertaken by the buyer's bank 14 at the execution date. This is a date determined by the bank in order to ensure funds are received by the seller's bank 16 on the due date which has been agreed between the parties in the initial terms of purchase (section 1 above).
   Conditional payment instructions, whether assured or not, will be executed by the bank at the execution date only if the bank 14 has received confirmation that pre-agreed conditions were fulfilled. This confirmation must take place a maximum five days after the condition expiry date which is specified in the payment initiation sent by the buyer 10 to the buyer's bank 14 via the e-payments initiation system 18. This term could be varied as appropriate.
   Figure 3 shows messaging sequences 6 to 9 which will be described in turn.
**6.** This sequence only applies where the payment is conditional. The buyer 10 sends a message to its bank via the e-payments initiation system 18 confirming satisfaction of the pre-agreed conditions. Alternatively the buyer's bank 14 checks and confirms that conditions have been fulfilled on behalf of its customer. In this case, the condition confirmation message is sent by the buyer's bank to the e-payments initiation system 18.
**7.** The funds transfer is undertaken, assuming that any required confirmation of condition fulfilment has been received. This transfer is not made through the e-payments initiation system 18 but via traditional payment settlement systems.
**8.** The buyer's bank debits the buyer's account and may send a debit confirmation message to the e-payments initiation system 18. This message need not go through the e-payment initiation system 18 and may be sent to the customer via some other means.
**9.** The seller's bank 16 credits the account of the seller and advises its customer accordingly. The advice, as with the debit confirmation in step 8 above, can be sent either through the e-payment initiation system 18 or through some other method. However, the seller's bank 16 must send a credit confirmation to the e-payments initiation system in order to close the transaction within the application.
   There are three ways in which a buyer may cancel a revocable or irrevocable payment initiation relating to a transaction:
   1. The cancellation may be made from the buyer's own back-office system in the case of an application to application mode;
   2. The cancellation may be made from the realtime transaction information and update functionality provided on the buyer's bank's web site; and
   3. The cancellation may be made from the web site of the seller, if the seller has implemented that functionality.

If the payment initiation mechanism agreed on between the parties is revocable, the payment initiation against funds can be cancelled unilaterally by the buyer provided that funds transfer has not begun. In other words, the cancellation may take place unilaterally at any time prior to the payment execution date. The manner in which this can be achieved is illustrated in Figure 4.

Referring to Figure 4, at stage 1, the buyer requests the cancellation. A cancellation message is sent to the e-payment initiation system 18 which changes the status of the transaction to "cancel" provided that the payment execution date has not passed. If it has, the cancellation request is rejected.

At stage 2, the e-payment initiation system 18 sends a cancellation confirmation message to all parties involved in the transaction.

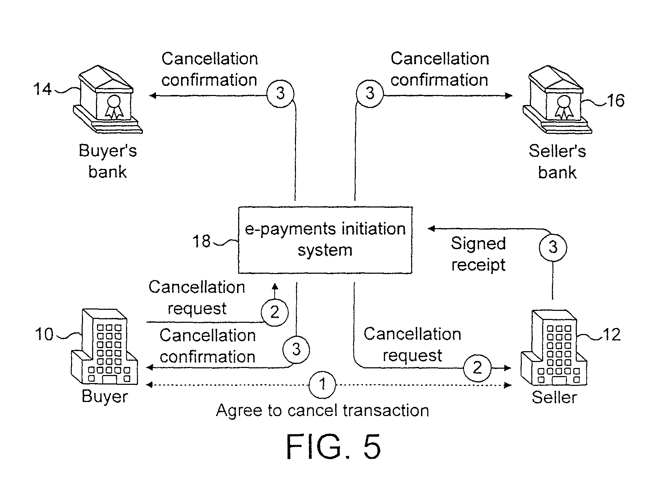

Figure 5 illustrates how an irrevocable payment initiation may be cancelled. As mentioned above, if the parties have chosen an irrevocable payment initiation mechanism, that payment initiation, or an assured payment, can only be cancelled if both the buyer and seller agree to the cancellation and the execution date has not passed.

Referring to Figure 5, the stages in the cancellation are as follows:
The buyer and seller first agree to the cancellation of the transaction. This takes place outside the e-payment initiation system. The buyer directly sends a cancellation request to the seller through the e-payments initiation system. This request must be sent before the execution date of the transaction. If that date has passed the request is rejected. The seller 12 either rejects or accepts the request.
1. If the seller accepts the cancellation request, a signed receipt is sent by the seller to the e-payment initiation system which then sends a cancellation confirmation to each of the other three parties: the buyer, the buyer's bank and the seller's bank. The payments initiation system updates the status of the transaction to "cancel". If the seller refuses to cancel the transaction the buyer is informed of that refusal but the buyer's bank and the seller's bank are not so informed.

It will be appreciated from the above description that the e-payments initiation system and the application it runs, perform a set of actions in relation to each transaction. These actions include the establishment of a reliable communication between all parties to the transaction; the verification of the identity of parties involved; the creation of a new unique transaction identifier (transaction ID) when the first message related to a new transaction is received; message syntax validation; transaction flow monitoring; generation of time-outs and error codes; chronology checking; and transaction status update.

It will also be appreciated that all messages related to a transaction, including any underlying commercial data about the transaction are stored at the e-payments initiation system 18. The storage means may be a conventional database but the messages must be stored in a secure manner. The length of time for which a message is stored may vary, for example, depending on whether there is on-line or off-line access. In the example given above, payment was initiated on-line. A payment initiation was agreed via the seller's web site. Payment initiation could be triggered in a number of other ways. For example, it could be by a back-office application of the buyer linked directly to the e-commerce system or by the presentation and approval of an invoice from the seller's web site. Payment could be initiated from an on line marketplace either to the benefit of the marketplace or directly to the benefit of the seller. This would depend on the marketplace's business model.

It will be appreciated that the system supports a staged process so that ordering and payment can be handled in two steps. This is necessary in organisations where different people are involved in the purchasing and payment process. Where payment initiation happens at a date later than the ordering event, the buyer can refer to the transaction ID to link the payment initiation to the underlying commercial data.

Payment assurance was mentioned in the example given above. A payment assurance service may be obtained from the buyer's financial institution. Before requesting online payment assurance through the e-payment initiation system 18 a buyer must first negotiate an assurance limit with its bank. The buyer's bank can then issue an on-line payment assurance for a specific transaction at the request of the buyer. This assurance constitutes an obligation to make the assured amount available to the seller's bank by the due date, provided that the pre-agreed conditions, if there are any, have been fulfilled. By providing payment assurance, the buyer's bank endorses a primary liability towards the seller. This means that the bank substitutes itself for the buyer in the payment obligation.

The seller may also require a payment assurance from its own bank. This is a reassurance. This is requested from his own bank and is additional to the payment assurance from the buyer's bank. The requirement for assurance and reassurance are contained in the initial initiation message. The seller's bank reassurance is requested after the buyer's bank has granted its payment assurance and constitutes a secondary liability. This means that it is an obligation on the seller's bank to submit funds to the seller if the buyer's bank has failed to honour its obligation. The seller's bank will, under normal conditions, in this case, have recourse to the buyer's bank outside the application.

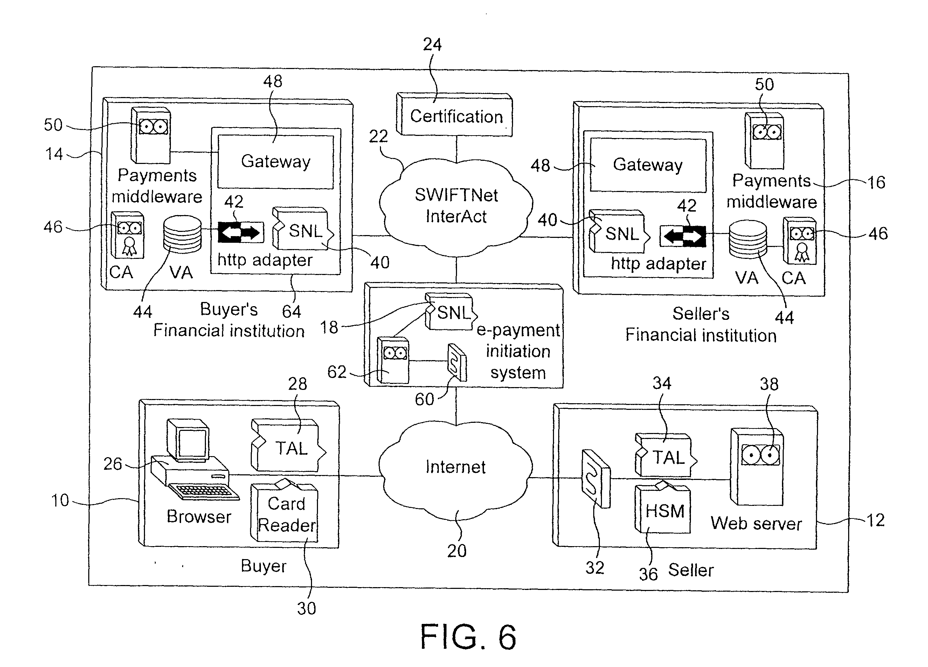

Figure 6 shows one example of a physical realisation of the system described with respect to Figures 1 to 5. The e-payments initiation system 18 communicates with the buyer and seller 10 and 12, via the public Internet 20 secured by secure socket layer (SSL). The e-payments initiation system 18 communicates with the buyer's bank 14 and seller's bank 16 via a private network such as the SWIFTNet 22 network operated by the applicant which is a well known interbank communication network. Alternatively, some other private network could be used or the public Internet could be used for these communications.

The buyer side comprises a computer such as a conventional PC which runs a standard Internet browser 26 such as Internet Explorer 5 and which also runs the access software TrustAct Link (TAL) 28 which enables the buyer to communicate with the e-payments initiation intermediary referred to above. This link is well documented and requires no further explanation. The buyer terminal also includes a security device such as a card reader 30 which enables it to read the Smart cards as part of their certification scheme.

The seller side comprises a secure Internet access, for example a firewall 32, a TrustAct Link 34, a hardware security module (HSM) 36 to which the TrustAct Link 34 is connected and a web server 38.

The buyer and seller in Figure 6 are shown in web browser to web server mode. Alternatively, the arrangement could be an application to application mode.

Each of the buyer's and seller's banks 14 and 16 have the same functionality. Communication with the e-payments initiation system is via a SWIFTNet Link (SNL) 40 which is required for interaction with SWIFTNet and is well known. An http adapter 42 allows communication with a validation authority (VA) 44.

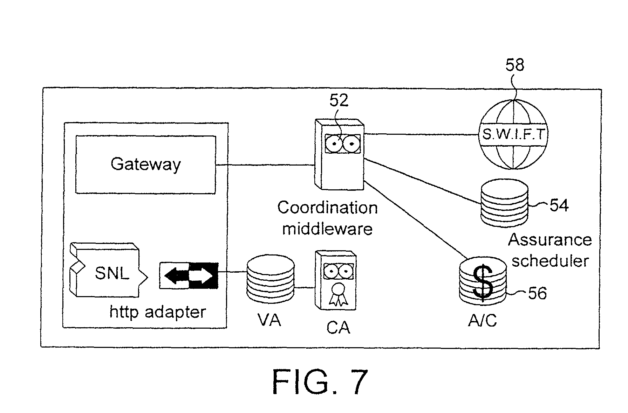

Communications between the e-payments initiation system and the financial institution's back office processing application is performed via a SWIFT Alliance Gateway 48 which is required for interaction with the SWIFTNet system and may be regarded as an interface with system payments middleware 50. The payments middleware 50 may be seen in greater detail in Figure 7. Co-ordination middleware 52 will translate the messages into back-office functions sent, for instance, to an assurance limit scheduler. Other communication systems may be used.

The e-payments initiation system 18 comprises a firewall 60 between the system and the Internet which links to the main payments initiation system server 62. A SWIFTNet Link 64 is provided between the system server 62 and the SWIFT network 22. The system server 62 handles all the messages described above and includes a store for storing transaction information. The transaction server may be any suitable commercially available server.

The e-payments initiation system also provides to the financial institutions, a real time transaction information and update functionality that allows the financial institutions and their clients to view the status and details of transactions that they are engaged in and to take specific actions in relation to these transactions. The ability to view and act is dependent on their role in the transaction.

On-line transaction information and update functionality is accessible by customers from the web site of banks. It may also be made available to banks directly from the e-payments initiation system. Authorised parties may see the details of parties to a transaction, the commercial data that underlies the transaction, the payment instruction, any conditions that are attached to the transaction, the latest status and the history of the transaction, including the date, time and status of each transaction related message.

It will be appreciated from the above description of a preferred embodiment that a system and method are provided for secure and trusted electronic payment initiation and assurance. It provides on-line payment initiation supporting on-line trading; identity assurance, which enables trading partners to be able to rely on the identity of their counterparties; payment assurance, to provide certainty of payment for the seller; link the trade transaction and the payment, to support reconciliation. It has the advantage in that transactions can be performed in real time and that the risk of payment and performance fraud which is prevalent in Internet transactions is minimised. The system ensures non-repudiation of the commercial and payment engagements; integration of the payment initiation process with the commercial transaction; and the possibility of real-time information about the status of transactions which can be accessed by the parties.

Various modifications to the embodiments described are possible and will occur to those skilled in the art. For example, the payments initiation system may be implemented using models other than the four corner model described and including two and three corner models. The invention is limited only by the scope of the attached claims. The embodiment described above is a real time system. However, embodiments of the invention may be implemented as a non-real time system.

## Claims

1. A method of electronically initiating payments the method comprising:
sending an instruction message to a payments initiation intermediary, the message including a payment instruction and/or commercial data;
processing and storing the initiation message at the payments initiation intermediary; and
sending the initiation message to the buyer's financial institution where the message includes a payment instruction to be actioned.

2. A method according to claim 1, wherein the processing of the electronic message at the payments initiation intermediary comprises assigning a unique identifier to the transaction.

3. A method according to claim 1 or 2, wherein the processing of the electronic message comprises time stamping and storing the message.

4. A method according to claim 1, 2 or 3, wherein the processing of the electronic message comprises validating the identity of the parties to the transaction.

5. A method according to any of claims 1 to 4, wherein the buyer initiates the electronic message either through generation of the message through its own back office system or as a result of interaction between the buyer's browser and an external web site.

6. A method according to claim 5, wherein prior to sending the electronic message, the buyer adds payment conditions to the payment terms.

7. A method according to claim 4, wherein the payment instruction is held by the payments initiation intermediary until the identity of some or all of the parties to the transaction has been validated and then sent to the buyer's bank.

8. A method according to any preceding claim, wherein the payments initiation intermediary, on receipt of a positive response from the buyer's bank to the electronic message, sends a payment initiation confirmation to the seller's bank.

9. A method according to claim 8, wherein the commercial transaction data is attached to the payment initiation confirmation at the payments initiation intermediary and forwarded with the payments initiation confirmation to the seller.

10. A method according to claim 8 or 9, comprising sending a confirmation message to the buyer that the payment instruction has been accepted by the buyer's bank, via the payments initiation intermediary.

11. A method according to any preceding claim, comprising sending a message from the buyer to the buyer's bank, via the payments initiation intermediary confirming that pre-agreed conditions have been fulfilled.

12. A method according to any of claims 1 to 11, comprising sending a message from the buyer's bank to the payments initiation intermediary confirming that pre-agreed conditions have been fulfilled.

13. A method according to any preceding claim, wherein the buyer's bank sends a debit confirmation message to the payments initiation intermediary on transfer of funds for the transaction from the buyer's bank to the seller's bank.

14. A method according to any preceding claim, wherein the seller's bank sends a credit confirmation message to the payments initiation intermediary after transfer of funds for the transaction from the buyer's bank to the seller's bank.

15. A method according to any preceding claim, wherein the agreed payment terms allow the buyer to revoke the payment initiation, comprising sending a payment initiation revocation message from the buyer to the payments initiation intermediary, and sending a cancellation confirmation from the payments initiation intermediary to the buyer's bank.

16. A method according to claim 15, comprising sending the cancellation confirmation to the seller and the seller's bank.

17. A method according to any of claims 1 to 14, wherein the agreed payment terms allow the buyer to revoke the payment initiation only with the agreement of the seller, comprising sending a payment initiation revocation request message from the buyer to the seller through the payments intermediary, and sending a cancellation confirmation or refusal from the payments initiation intermediary to the buyer.

18. A method according to claim 17, comprising sending the cancellation confirmation to the buyer's bank and the seller's bank.

19. A method according to claim 17 or 18, comprising modifying the status of the transaction to cancelled in realtime on sending the cancellation confirmation.

20. A method according to any of claims 15 to 19, wherein the payment initiation cancellation message is sent from the buyer's back office systems or as a result of interaction between a buyer's browser and an external web site.

21. A method according to any preceding claim, wherein the initiation message comprises a payments initiation message.

22. A method of electronically requesting a payment assurance, the method comprising:
sending a payment assurance request to a payments initiation intermediary;
processing and storing the payment assurance request at the payments initiation intermediary; and
sending the payment assurance request to a financial institution from which assurance is requested to be actioned.

23. An electronic payments initiation system, comprising a payments initiation intermediary logically located between a buyer and a buyer's financial institution, the payments initiation intermediary comprising a processor and a store for processing and storing initiation messages sent from the buyer, the initiation messages including a payment instruction and/or commercial data, the payments initiation intermediary further comprising a message sending device for sending theinitiation message to the buyer's bank where the message includes a payment instruction to be actioned.

24. A system according to claim 23, wherein the processor includes a unique identification assignor for assigning a unique identification to each transaction initiated through the system.

25. A system according to claim 23 or 24, wherein the processor includes a time stamper for time stamping the payment instruction message.

26. A system according to claim 23, 24 or 25, wherein the processor accesses an identity validator for validating the identity of some or all of the parties to the transaction.

27. A system according to claim 26, wherein the payments initiation intermediary includes a message holder for holding the payments instruction until the identity of some or all of the parties to the transaction have been validated.

28. A system according to any of claims 23 to 27, wherein the payments initiation intermediary includes means for detecting a positive response message from the buyer's bank in response to the payment instruction and means for sending a payment initiation confirmation to the seller's bank on receipt of the positive response message.

29. A system according to claim 28, wherein the payments initiation intermediary comprises means for attaching the commercial transaction data to the payment initiation confirmation prior to sending the confirmation to the seller.

30. A system according to claim 28 or 29, wherein the payments initiation intermediary comprises means for receiving a confirmation message from the buyer's bank confirming that the payment instruction has been accepted, and means for sending the payment confirmation message to the buyer together with the commercial transaction data.

31. A system according to any of claims 23 to 30, wherein the payments initiation intermediary comprises means for sending a message received from the buyer to the buyer's bank confirming that pre-agreed conditions have been fulfilled.

32. A system according to any of claims 23 to 31, wherein the payments initiation intermediary comprises means for receiving a message from the buyer's bank confirming that the pre-agreed conditions have been fulfilled.

33. A system according to any of claims 23 to 32, wherein the payments initiation intermediary comprises means for receiving a debit confirmation message from the buyer's bank and a credit confirmation message from the seller's bank.

34. A system according to claim 31, 32 or 33, comprising means for updating the status of the transaction at the payments initiation intermediary, and making the status of the transaction available to the parties.

35. A system according to claim 34, wherein the means for making the status of transactions available to the parties comprises a realtime transaction information service and further comprises means for permitting a party to the transaction to initiate actions relating to the transaction in dependence of their role in the transaction and the transaction status.

36. A system according to any of claims 23 to 35, wherein the payments initiation intermediary comprises means for receiving a payment initiation revocation message from the buyer and means for sending a cancellation confirmation message to at least the buyer's bank.

37. A system for electronically requesting payment assurances, comprising:
A payments initiation intermediary logically located between a buyer and a buyer's financial institution, the payments institution intermediary comprising a processor and a store for processing and storing electronic payment assurance requests sent by a party to a transaction, the payments initiation intermediary further comprising a message sending device for sending the payment assurance request to the financial institution from which assurance is requested to be actioned.
